(19) Europäisches Patentamt
European Patent Office
Office européen des brevets

(11) Numéro de publication: **0 133 130**
**B1**

(12) **FASCICULE DE BREVET EUROPEEN**

(45) Date de publication du fascicule du brevet: **09.12.87**

(51) Int. Cl.⁴: **C 08 K 5/37**, C 08 L 27/06

(21) Numéro de dépôt: **84401567.7**

(22) Date de dépôt: **26.07.84**

# (54) Procédé de stabilisation thermique de polymères halogéno-vinyliques et résines ainsi stabilisées.

(30) Priorité: **02.08.83 FR 8312691**
**18.07.84 FR 8411347**

(43) Date de publication de la demande:
**13.02.85 Bulletin 85/7**

(45) Mention de la délivrance du brevet:
**09.12.87 Bulletin 87/50**

(84) Etats contractants désignés:
**CH DE GB IT LI LU NL**

(56) Documents cités:
**EP - A - 0 001 631**
**FR - A - 2 492 391**
**US - A - 3 144 422**

(73) Titulaire: **SOCIETE NATIONALE ELF AQUITAINE, Tour Aquitaine, F-92400 Courbevoie (FR)**
Titulaire: **M & T CHIMIE S.A., 29 Avenue de l'Eguilette, F-95310 Saint-Ouen L'Aumone (FR)**

(72) Inventeur: **Ranceze, Dominique, 42 Avenue Thiers, F-64000 Pau (FR)**
Inventeur: **Roussely, Jean, 14, rue Lagille, F-75018 Paris (FR)**

(74) Mandataire: **Kohn, Armand, 5 Avenue Foch, F-92380 Garches (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 133 130 B1

## Description

L'invention concerne la stabilisation à la chaleur de polymères halogèno-vinyliques et, en particulier, du chlorure de polyvinyle. Elle comprend un procédé consistant à incorporer au polymère des adjuvants qui réduisent les effets nocifs de la chaleur sur le polymère. L'invention vise également, bien entendu, les masses plastiques obtenues par l'application de ce procédé aux différents polymères, renfermant les motifs halogèno-vinyliques. Elle porte plus spécialement sur les masses plastifiées de tels polymères ou copolymères.

Les efforts en vue de rendre les polymères halogéno-vinyliques le moins sujets possible aux altérations, dues à des effets thermiques, constituent une occupation permanente des industriels qui produisent ou utilisent ces matières. En ce qui concerne le chlorure de polyvinyle, le plus important des produits de ce type, il y a plus de 50 ans qu'il fait l'objet de recherche en vue de sa stabilisation à la chaleur; son façonnage ayant lieu à chaud, généralement entre 150° et 200 °C, des réactions de décomposition avec perte d'HCl, de scission des chaînes macromoléculaires, et autres, abaissent les propriétés mécaniques, rhéologiques et électriques du produit avec coloration pouvant aller assez rapidement jusqu'au noir. Aussi, depuis un demi-siècle, de nombreux adjuvants ont-ils été utilisés, pour réduire ce processus gênant. Parmi les premiers stabilisants figuraient des savons alcalino-terreux et des composés du plomb, notamment des silicates. D'autres dérivés métalliques furent appliqués par la suite; puis on perfectionnait peu à peu la stabilisation par adjonction d'un second composé ou constabilisant, tel que, par exemple, époxyde, phosphite, phénol antioxydant, thiocomposé organique, etc. Au cours de la dernière décennie, des progrès sensibles ont été réalisés par l'emploi de systèmes comprenant à la fois un sel de Cd et un sel de Ba ou de Ca: dès 1970, on trouvait ainsi, sur le marché, plus de 80 produits de ce type, sous différentes marques de fabrique, telles que «Advastab», «Ferro Mark», «Synpron», etc. (Modern Plastics Encyclopedia, 1970–1971, pages 870–875). Cependant, la toxicité et la cherté du cadmium incitaient à la recherche d'autres moyens, ce qui a conduit, entre autres, à des systèmes de composés de Ba avec Zn ou Ca avec Zn, dont également nombreux produits étaient vendus. D'autre part, de bons résultats ayant été obtenus avec des dérivés organiques de Sn et de Sb, on a cherché à les améliorer et l'on a trouvé intéressante l'adjonction de certains mercaptans, comme indiqué dans la FR-A-2 434 835 et dans DE-A-1 217 609 ou US-A-3 063 963. Toutefois, tant pour les raisons sanitaires que pour celles de prix, la tendance actuelle est au remplacement des métaux lourds, aussi bien du Cd que de l'Sn par des stabilisants parfaitement non toxiques et moins chers. On cherche donc à revenir, à l'heure actuelle, aux systèmes alcalino-terreux et zinc, en exaltant leur action stabilisatrice par d'autres adjuvants. Un exemple typique de tels efforts se trouve dans FR-A-2 492 391 et EP-A-0 022 047, qui portent sur des stabilisants formés par des composés de Ca et de Zn, améliorés au moyen de différents esters thioglycoliques; le second de ces documents préconise, en outre, l'adjonction d'un polyol.

Etant donné que les additifs, quels qu'ils soient, peuvent seulement retarder les altérations dues à la chaleur, et éventuellement à la lumière visible ou à d'autres radiations, mais sans supprimer complètement les réactions de décomposition, aucun des résultats, obtenus jusqu'à présent, ne pouvait être définitif: toute recherche peut donc escompter les chances de faire mieux que la technique antérieure.

La présente invention résulte de recherches effectuées selon la nouvelle tendance, mentionnée plus haut, et elle apporte une amélioration nette de la résistance des résines halogéno-vinyliques à la chaleur. La caractère inattendu de cette invention réside dans le fait que le perfectionnement de la stabilité est obtenu plus économiquement, avec encore moins d'odeur, par l'adjonction à la résine de certains mercapto-esters, grâce à la diminution du nombre relatif de groupes –SH dans la molécule de tels esters utilisés selon la technique antérieure.

L'emploi de mercapto-esters, en général conjointement avec des composés métalliques stabilisants, et en particulier de mercapto-esters de polyols, est connu par FR-A-2 492 391 et par US-A-3 144 422; l'effet augmente avec la proportion de stabilisant dans la résine, donc avec la teneur en groupes –SH. Or, de façon surprenante, la stabilisation est au moins aussi bonne, ou même meilleure, tout en apportant une économie certaine, lorsque – suivant l'invention – on utilise des mercapto-esters qui renferment moins de –SH par rapport à leurs restes d'alcool, et par conséquent moins de groupes mercapto pour 100 parties de résine.

Un tel fait ne ressort pas de EP-A-1 631: ce document dit seulement qu'une partie des OH d'un polyol peuvent être estérifiés par un acide carboxylique autre que mercapto-acide; il s'agit apparement d'acides acétique et propionique et rien ne laisse prévoir des résultats particulièrement intéressants avec des acides gras.

Les avantages de l'invention résident en ce qu'elle conduit à des masses plastiques aussi stables et d'aussi bonnes qualités que les masses additionnées de composés de Cd ou de Sn, alors qu'elle n'utilise que des ajuvants bien moins chers et non toxiques. En outre, les masses plastiques, stabilisées suivant l'invention, sont dépourvues de toutes odeur, contrairement à celles qui contiennent des esters thioglycoliques de la technique antérieure; elles ont une bonne tenue à l'humidité et à l'eau, grâce à l'absence d'adjuvants hydroxylés employés dans l'art antérieur mentionné plus haut.

Le procédé suivant l'invention, qui consist à incorporer à une résine halogéno-vinylique un ou plusieurs esters d'acides organiques de polyols, renfermant le groupe mercapto, une partie des OH du polyol pouvant être estérifiée par un acide organique autre qu'un mercaptoacide, est caractérisé en ce que ce dernier est un acide gras en $C_6$ à $C_{18}$.

Dans des formes d'exécution avantageuse, l'ester mixte, de mercapto- et non-mercapto-acide, est accompagné d'autres stabilisants ou adjuvants, connus en soi, notamment des composés organiques de métaux alcalino-terreux ou/et de métaux des groupes IIB, IIIA, IVA et VA de la Classification Périodique, et de corps gras, de préférance oxydés.

Les stabilisants suivant l'invention sont fort efficaces dans le cas des résines plastifiées.

De préférence, le métal des groupes II à V susmentionnés est le zinc, mais il peut être choisi parmi d'autres, en particulier antimoine, silicium ou aluminium. En tant qu'alcalino-terreux conviennent surtout Ca, Ba ou/et Sr.

L'ester de mercapto-acide peut porter sur le même reste du polyol, les restes de plusieurs acides différents, renfermant les groupes –SH, ou/et de plusieurs acides sans –SH.

Les mercaptoacides, formant les esters mixtes, utiles suivant l'invention, peuvent être représentés globalement par la formule

$$(HS)_n\text{–}R\text{–}(COOH)_m \qquad (1)$$

dans laquelle n a une valeur de 1 à 5, m=1 ou 2, R étant une chaîne aliphatique ou un cycle, éventuellement ramifiés en $C_1$ à $C_{35}$; de préférence en $C_2$ à $C_{17}$, ce qui – pour m=1 – correspond à des nombres totaux respectivement $C_2$ à $C_{36}$ et $C_3$ à $C_{18}$.

Voici, à titre d'exemples non limitatifs, quelques-uns des mercapto-acides des esters utilisables selon l'invention:

α-mercaptopropionique $H_3C\text{–}C\,H\text{–}CO_2H$ (ou
SH
mercapto-2-propionique);

β-mercaptopropionique $HSCH_2CH_2CO_2H$ (ou mercapto-3 propionique);

ω-mercaptoundécanoïque $HSCH_3(CH_2)_9CO_2H$ (ou mercapto-11 undécanoïque)

mercapto-10 undécanoïque
$H_3C\,C\,H(CH_2)_8CO_2H$
SH

mercaptosuccinique $HO_2C\,C\,H\text{–}CH_2CO_2H$ (ou
SH
thiomalique);

dimercaptosuccinique $HO_2C\text{–}C\,H\text{–}C\,H\text{–}CO_2H$;
SH SH

mercapto-2 benzoïque 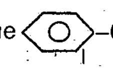 $\text{–}CO_2H$ (ou thiosalicylique)
SH

Comme indiqué plus haut, une partie des –OH du polyol, dont dérive le mercapto-ester, sont estérifiés par un autre acide carboxylique, qui peut ne pas porter de fonction –SH. Un tel acide carboxylique, de formule générale $R'(CO_2H)_p$, est préférentiellement un mono ou diacide (p=1 ou 2). R' peut être un groupe alkyle ou alkényle, linéaire ou ramifié, aliphatique ou aromatique, renfermant au moins 6 atomes de carbone, de préférence de 6 à 18. Bien que tout acide carboxylique puisse être utilisé, les préférés sont des acides gras, notamment caprylique, octanoïque, cétanoïque, pelargonique, caprique, undécanoïque, laurique, myristique, palmitique, stéarique, isostéarique, oléique, linoléique, linolénique, béhénique, montanique. Conviennent également bien les acides succinique, adipique, glutarique, pimélique, subérique, azelaïque, sébacique, dioléique, malique, tartrique ou phtalique, ainsi que des mono-acides aromatiques, comme le benzoïque.

Le polyol, dont dérive le mercaptoester mixte utilisé, suivant l'invention, peut être formé d'une chaîne ou d'un cycle carboné, généralement en $C_2$ à $C_{30}$, mais de préférence en $C_2$ à $C_{20}$, linéaire ou ramifié, comprenant un nombre de groupes –OH supérieur ou égal à 2. Diverses autres fonctions peuvent s'y trouver, en particulier: étheroxyde, thiol, sulfure, disulfure, polysulfure, acide carboxylique, ester, amine. En tant qu'exemples non limitatifs des polyols, peuvent servir les corps suivants:

éthylène glycol et polyéthylène glycol
$HO\text{–}(CH_2CH_2O)_rCH_2CH_2OH$ r = 1 à 30;
propylène glycol et polypropylène glycol
$HO(CH_2\text{–}C\,H\text{–}O)_s\text{–}CH_2C\,H\text{–}OH$
$CH_3$ $CH_3$ s = 1 à 30;

thiodiglycol $HOCH_2CH_2SCH_2CH_2OH$; pentaerythritol $C(CH_2OH)_4$; dipentaérythritol $(HOCH_2)_3C\,CH_2OCH_2C(CH_2OH)_3$; tripentaerythritol $(HOCH_2)_3CCH_2OCH_2C(CH_2OH)_2CH_2OCH_2C\text{-}(CH_2OH)_3$; triméthylolpropane $CH_3CH_2C\,(CH_2OH)_3$; glycérol $HOCH_2CH(OH)CH_2OH$; thioglycérol $HSCH_2CH(OH)CH_2OH$ ou $HOCH_2CH(SH)CH_2OH$; butane diol-1,2, butane diol-1,3; pentols, hexols et similaires. Bien qu'un reste de polyol constitue une partie indispensable des mercaptoesters, suivant l'invention, ceux-ci peuvent porter, en outre, des restes de mono-alcools: il est en effet recommandable d'alléger la masse molaire de l'ester, lorsqu'un polyacide est en jeu. Dans ce cas, une partie des carboxyles du polyacide peuvent être avantageusement estérifiés par un mono-alcool; ce dernier est en général en $C_1$ à $C_{20}$ et de préférence en $C_2$ à $C_8$. Cette précaution est utilie surtout lorsque le mercaptoester risque d'avoir une masse molaire supérieure à 1200.

A titre d'exemples non limitatifs des esters mixtes, revendiqués, on peut citer:

Tris (mercapto-3 propionate) mono-caprate de pentaérythrityle

$C(CH_2OC\,CH_2CH_2SH)_3\text{–}CH_2O\,C(CH_2)_8CH_3$
O O

Mono(mercapto-2 propionate) tris-caproate de pentaérythrityle

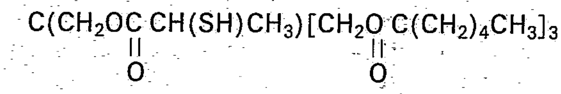

Tris(mercapto-3 propionate) mono-stéarate de pentaérythrityle

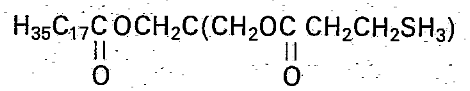

Bis(mercapto-3 propionate)- bis pelargonate de pentaérythrityle

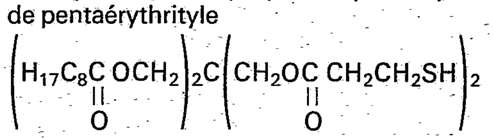

Bis(mercapto-3 propionate)monooctanoate du triméthylpropane

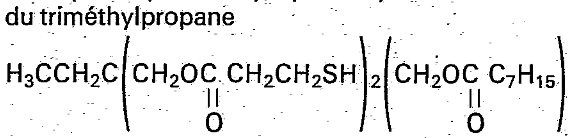

Mercapto-3 propionate laurate de l'éthylène glycol

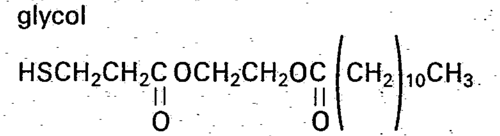

Bis(thioglycolate)-bis palmitate de pentaérythrityle

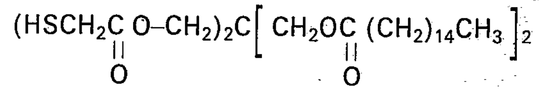

Bis(mercapto-3 propionate)-mono-oléate de glycéryle

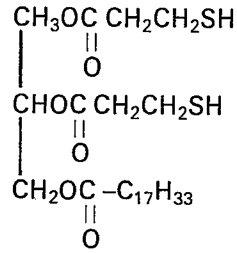

Bis(mercapto-3 propionate) monooctanoate de glycéryle

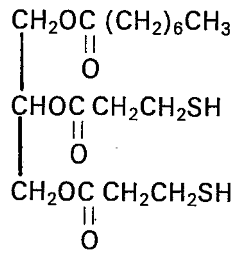

et/ou

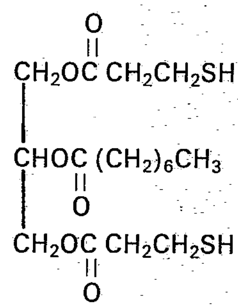

Mono(mercapto-3 propionate) monooctanoate du thioglycéryle

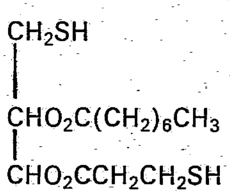

et/ou

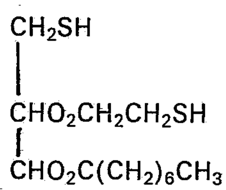

et/ou

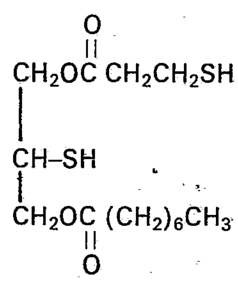

Le ou les corps gras, qui peuvent entrer avantageusement dans la composition des masses stabilisées, selon l'invention, sont de façon générale des esters d'alkyles en $C_1$ à $C_{12}$, du glycol ou/et du glycérol, d'un ou de plusieurs acides gras en $C_8$ à $C_{24}$, de préférence non saturés, ayant subi une époxydation. Il est pratique d'utiliser à cet effet une huile naturelle par exemple de lin, de soja ou de poisson, époxydée.

Le minimum de masse moléculaire du mercapto-ester mixte est de 178 correspondant aux acides les plus légers, mercaptoacétique et acétique, et le polyol le plus léger, l'éthylène glycol; cet ester mixte «minimal» est

$$HS{-}CH_2COO{-}CH_2CH_2{-}OOCCH_3$$

Le minimum préféré est 206 correspondant au mercaptopropionate-1 propionate-2 d'éthylène

$$HS{-}CH_2CH_2COO{-}CH_2CH_2{-}OOC{-}CH_2CH_3.$$

En tant qu'ester «lourd» on peut citer par exemple un mercaptoester mixte gras d'un sucre, en particulier tris-/mercaptostéarate]bis-stéarate de glucose.

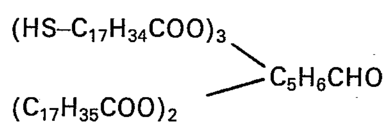 M=1608

Bien que les masses molaires des mercapto-esters utiles puissent aller de 178 jusqu'à environ 2000, il est préférable qu'elles soient comprises entre 200 et 1000. Ainsi, par exemple, le bis(mercapto-propionate)bis-octanoate de pentaérythrityle, qui donne d'excellents résultats, a une masse moléculaire de 564.

L'objet de l'invention est accompli dès qu'au moins un des OH du polyol est estérifié par un acide organique ne portant pas de –SH, alors que tous ou partie des autres OH le sont par un mercaptoacide. Inversement, peuvent convenir à la stabilisation les esters mixtes dont la molécule porte un seul mercaptoacide, le ou les autres acides étant exempts de –SH. Dans les cas les plus courants des esters issus de polyols ayant 2 à 6 groupes OH, il peut y avoir respectivement 1 reste de mercaptoacide pour 1 à 5 d'acide sans SH, ou réciproquement 1 à 5 restes d'acide non mercapto par reste de mercaptoacide.

Parmi les composés organiques de métal alcalino-terreux et le composé divers du zinc, ceux qui conviennent particulièrement bien sont les carboxylates, les mercaptides et $ZnCl_2$.

Parmi les carboxylates, on peut citer de façon non limitative les: caproate, éthyl-2 hexanoate, octanoate, pelargonate, laurate, palmitate, stéarate, oléate, benzoate, phénate, alkylphénate, naphténate, néoalcanoate. Parmi les mercaptides, on peut citer ceux qui dérivent de mercaptans aliphatiques, d'esters de mercapto-acides ou des esters de mercaptoalkyles.

Cependant, un certain nombre de dérivés tels que les carbonate, oxyde, hydroxyde, sulfate, halogénure (chlorure, bromure) peuvent également être avantageusement utilisés.

L'invention, qui s'applique aux différents polymères et copolymères halogéno-vinyliques, notamment aux chlorure de polyvinyle, chlorure de polyvinylidène, acétochlorure de polyvinyle, chlorure de polyvinyle surchloré, résines vinyliques chloro-fluorées, etc., présente surtout beaucoup d'importance pour les masses plastiques à base de chlorure de polyvinyle. Comme dans la technique connue, la proportion de stabilisant primaire, qui est ici un composé organique de métal alcalino-terreux joint à un composé organique du zinc, est en général de 0,01 à 6% en poids, et le plus souvent de 0,05 à 3%, par rapport à la résine à stabiliser. Lorsque le mercaptoester mixte, suivant l'invention, est employé comme co-stabilisant, sa proportion est dans les mêmes limites, sans devoir être égale à celle de stabilisant primaire.

Dans le cas particulier du chlorure de polyvinyle rendu souple par l'adjonction d'un plastifiant constitué par un ester, notamment par celle d'un phtalate, adipate, sébaçate, azélate, phosphate ou un polyester, les proportions pour 100 parties en poids de résine sont de préférence:

5 à 70 parties de plastifiant,
1 à 10 parties de corps gras,
0,1 à 2 parties de composé organique de métal alcalino-terreux
0,05 à 1,5 parties de composé organique de Zn
0,1 à 3 parties de mercapto-ester mixte.

Le rapport entre le composé alcalino-terreux et celui du zinc est de préférence de 1 à 6 moles du premier pour 1 mole du second. Dans le cas du calcium, les meilleurs rapports s'échelonnent entre 1 à 4 atomes Ca pour 1 Zn.

Dans les exemples non limitatifs qui suivent, des échantillons de chlorure de polyvinyle, stabilisé avec un adjuvant suivant l'invention, sont soumis à des essais de coloration au chauffage. Pour cela, les différentes compositions sont malaxées pendant 5 minutes à 160 °C sur un mélangeur à cylindres. Les feuilles obtenues ont une épaisseur voisine de 1 millimètre. L'essai thermique, proprement dit, est effectué en étuve du type «SIGMA» fabriquée par METRASTAT SA. Son principe repose sur la mise en évidence du changement de couleur graduel, résultant de la décomposition thermique de longues éprouvettes, en rubans de 25 cm de long, découpés dans les feuilles susmentionnées, exposées temporairement à la chaleur dans un four calorifugé maintenu à une température constante.

Outre son enceinte thermique, l'appareil comprend un système électromécanique assurant le transfert d'une platine porte-éprouvettes amovible, sortant du four à une vitesse constante, prédéterminée; un ensemble électronique assure la régulation de la vitesse de la platine et celle de la température du four.

La coloration de la résine est observée pour une température du four et une vitesse de sortie de l'échantillon données. Pour chaque essai, on relève le «temps de stabilité» qui est le temps au bout duquel la résine devient noire, ou bien on enregistre l'évolution de l'indice de jaune.

Les compositions soumises aux essais comprennent:

100 parties en poids de chlorure de polyvinyle, connu sous la dénomination commerciale du «LACOVYL S 111» à indice K=67, et

40 parties en poids de phtalate de dioctyle (nom commercial PALATINOL AH).

Exemples 1 à 5

Les essais de tenue à la chaleur sont effectués à 190 °C, la vitesse de sortie des éprouvettes étant réglée à 30 minutes.

Dans le tableau de résultats ci-après, les % indique les proportions d'adjuvants incorporés dans les échantillons, avant le passage au four.

| Exemple n° | 1 | 2 | 3 | 4 | 5 |
|---|---|---|---|---|---|
| Tétrakis (mercapto-3 propionate) de pentaérythrityle | 0 | 0,4% | 0 | 0 | 0 |
| Bis(mercapto-3 propionate) bis octanoate de pentaérythrityle | 0 | 0 | 0,4% | 0 | 0,4% |

| Exemple n° | 1 | 2 | 3 | 4 | 5 |
|---|---|---|---|---|---|
| Huile de soja époxydée | 0 | 0 | 0 | 4% | 4% |
| Indice de jaune après 20 minutes | 160 | 135 | 127 | 155 | 90 |

La première constatation, qui se dégage de ces résultats, est que le mercapto-ester mixte de l'exemple 3 (bis-bis), malgré sa teneur en –SH moitié seulement de celle du tétrakis correspondant (exemple 2), au une efficacité au moins aussi bonne que ce dernier, ou même un peu meilleure: indice de jaune 127 contre 135. L'emploi de ce composé mixte et donc bien plus économique.

Le second résultat intéressant ressort des exemples 4 et 5: en présence de l'huile de soja époxydée, le mercapto-ester mixte (ex. 5) agit fortement, en abaissant l'indice de jaune de 150 à 90.

Exemples 6 à 10

Association d'un mercapto-ester mixte avec des stabilisants classiques à base de composés métalliques. Essais à 190 °C.

| Exemple n° | 6 | 7 | 8 | 9 | 10 |
|---|---|---|---|---|---|
| Vitesse de sortie des éprouvettes, en mm | 30 | 30 | 30 | 60 | 60 |
| Octanoate de Zn % | 0,08 | 0,08 | 0,08 | 0,08 | 0,08 |
| Octanoate de Ba % | – | – | – | 0,80 | 0,80 |
| Tétrakis (mercapto-3 propionate) de pentaérythrityle | – | 0,4 | – | – | – |
| Bis(mercapto-3 propionate)-bis octanoate de pentaérythrityle | – | – | 0,4 | – | 0,4 |
| Temps de stabilité en min | 15 | 18 | 18 | 43 | 53 |

Comme dans les essais précédents le mercapto ester mixte (bis-bis) des exemples 8 et 10 se révèle aussi efficace que le mercapto-ester (tétrakis) de l'exemple 7, bien qu'il renferme deux fois moins de groupes –SH que ce dernier.

L'association du composé mixte avec les stabilisants classiques aux Ba et Zn (ex. 9–10) procure une amélioration de la stabilité de (53–43) : 43 = 23,2% ce qui est tout à fait appréciable.

Exemples 11 à 19

On opère comme dans les exemples précédents, mais la proportion de plastifiant, phtalate dioctylique, est de 50 parties en poids pour 100 parties de résine et celle-ci contient 5% d'huile de soja péroxydée, 0,3% de stéarate de Ca et 0,15% de stérate de Zn. Les stabilités à 190 °C, en minutes, ont été trouvées par l'adjonction de différents mercaptoesters.

| Exemple | Adjuvant % – constitution | Stabilité min |
|---|---|---|
| 11 | Aucun | 160 |
| 12 | 0,5 Tétra (mercapto-3 propionate) de pentaérythrityle | 203 |
| 13 | 1,0 Tétra(mercapto-3 propionate) de pentaérythrityle | 227 |
| 14 | 1,0 Bis(mercapto-3 propionate) bis-octanoate de pentaérythrityle | 226 |
| 15 | 1,0 Tétra(mercapto-11 undécanoate) de pentaérythrityle | 225 |
| 16 | 1,0 Tris(mercapto-11 undécanoate) mono-undécanoate de pentaérythrityle | 226 |
| 17 | 1,0 Bis-mercapto-acètate de propylèneglycol | 189 |
| 18 | 1,0 Mercapto-acétate hexanoate de propylèneglycol | 194 |
| 19 | 1,0 Mercapto-11 undécanoate d'éthyle | 176 |

Ces essais montrent la possibilité d'augmenter la stabilité d'environ 30% (de 160 à 226) par l'utilisation conjointe d'un mercapto-ester mixte avec un système stabilisant classique qui comporte une huile péroxydée et les stéarates de Ca et Zn.

Ils confirment les résultats précédents en ce qui concerne l'avantage surprenant du mercapto-ester mixte sur le mercapto-ester ordinaire. Ainsi l'exemple 14 (ester mixte) donne un résultat aussi bon que l'exemple 13 (mercapto seul), malgré sa teneur bien plus faible en –SH. Comme cette dernière est moins que la moitié de celle du composé de l'exemple 13, il y aurait lieu plutôt de comparer l'exemple 14 avec 12 qui contient 0,5% de mercapto-ester: or la stabilité dans ce cas est de 203 mn contre 226 pour l'adjuvant selon l'invention (ex. 14).

Même constatation s'impose au sujet des exemples respectifs 15–16 et 17–18; il est à noter en passant que le mercapto-acétate de la technique antérieure (exemple 17) communique une odeur à la résine.

L'exemple 19 montre qu'un mercapto-ester de mono-alcool est moins efficace que les mercapto-esters de polyols.

Exemples 20 à 23

En appliquant la technique des exemples précédents à la même composition de chlorure de polyvinyle avec 50% de phtalate dioctylique et 5%

d'huile de soja époxydée, on a fait varier la nature et les proportions des stabilisants. Les exemples 20 à 22 portent sur l'emploi de composés de Ca et Zn, tandis que dans l'exemple 23 on a utilisé des stabilisants de l'art antérieur à base de Cd et Ba, considérés comme particulièrement efficaces.

| Exemple n° Stabilisants | 20 % d'adjuvant | 21 | 22 | 23 |
|---|---|---|---|---|
| Laurate de Ca | 0,60 | – | – | – |
| Stéarate de Ca | – | 0,30 | 0,30 | – |
| Stéarate de Zn | 0,15 | 0,15 | – | – |
| Mercaptide de Zn $Zn(SCH_2CH_2COOn\text{–}C_{12}H_{25})_2$ | – | – | 0,15 | – |
| Stérate de Cd | | – | – | 1,50 |
| Stérate de Ba | | – | – | 1,50 |
| Bis(mercapto-3 propionate) bis octanoate de penta-érythritol | 0,50 | 1,0 | 0,2 | – |
| Stabilité en minutes | 241 | 226 | 230 | 250 |

Ces résultats démontrent que, grâce à l'adjonction de mercapto-ester, on arrive à une stabilisation équivalente à celle que procure le système connu Cd-Ba; cela, apporte l'avantage d'éviter toute toxicité due au métal lourd, ainsi qu'un prix de revient plus bas.

Exemples 24 à 26

La composition de résine, comprenant pour 100 parties de chlorure de polyvinyle, 50 parties de phtalate de dioctyle et 5 parties d'huile de soja peroxydée, est utilisée avec 0,6% de laurate de Ba et 0,15% de stéarate de Zn comme stabilisants classiques.

L'étuve est réglée à 190 °C avec une vitesse de sortie des éprouvettes en 180 minutes.

Les stabilités suivantes sont trouvées avec chacun des co-stabilisants employés, pour trois concentrations différentes de ces derniers.

| Ex n° | % | 0 | 0,1 | 0,2 | 0,5 |
|---|---|---|---|---|---|
| 24 | Bis(mercapto-3 propionate)bis-pélargonate de pentaérythrityle | 105 | 119 | 124 | 139 |
| 25 | Bis(mercapto-3 propionate)bis-octanoate de pentaérythrityle | 105 | 117 | 131 | 153 |
| 26 | Tétra(mercapto-3 propionate) de pentaérythrityle | 105 | 108 | 122 | 131 |

On a donc, avec 0,5% de co-stabilisant, dans l'exemple 24, une augmentation de la stabilité de

139–105 = 34 soit (34:105)100 = 32,3% et dans l'exemple 25:

153–105 = 48 soit (48:105)100 = 45,7% contre 131–105 = 26 soit (26:105)100 = 24,8% seulement avec le mercapto-ester normal de l'exemple 26.

Exemple 27

Les exemples 8 et 10 sont répétés avec du $ZnCl_2$ à la place de l'octanoate de Zn: pratiquement les mêmes résultats sont obtenus.

Exemples 28 et 29

Comme dans les exemples précédents, on a utilisé des mélanges de 100 parties de même chlorure de polyvinyle avec 50 parties de phtalate de dioctyle, 5 parties d'huile de soja époxydée, 0,6 p. d'octanoate de Ba et 0,04 p. de $ZnCl_2$.

Opéré à 190 °C, sortie des éprouvettes en 180 min

Temps de stabilité trouvé:

ex. 28, sans autre adjuvant 84 min

ex. 29, +1 partie de bis(mercapto-3 propionate)-bis-octanoate de pentaérythrityle 137 min

soit une amélioration de 60%

Exemple 30

Essai sur chlorure de polyvinyle non plastifié, additionné seulement de bis(mercapto-3 propionate)-bis-octanoate de pentaérythrityle. Opéré à la presse à 160 °C. L'indice de jaune trouvé: 90 contre 101 pour le témoin sans aucun adjuvant.

## Revendications

1. Procédé pour la stabilisation à la chaleur d'une résine halogéno-vinylique, qui comprend l'incorporation à la résine d'au moins un mercapto-ester de polyol, cet ester étant mixte, résultant de l'estérification d'une partie seulement des hydroxyles du polyol par un mercaptoacide, tandis que tout ou partie des autres hydroxyles sont estérifiés par un acide exempt de –SH, caractérisé en ce que ce dernier acide est un acide gras en $C_6$ à $C_{18}$.

2. Procédé suivant la revendication 1, caractérisé en ce que le mercapto-acide, dont le reste est présent dans le mercapto-ester mixte, répond à la formule

$$(HS)_n\text{–}R\text{–}(COOH)_m$$

où n a une valeur de 1 à 5, m = 1 ou 2, R étant une chaîne aliphatique en $C_1$ à $C_{35}$, ou un cycle.

3. Procédé suivant la revendication 1 ou 2, caractérisé en ce que le polyol, dont dérive le mercapto-ester mixte, est formé d'une chaîne ou d'un cycle en $C_2$ à $C_{30}$, porteur de 2 à 6 hydroxyles.

4. Procédé suivant la revendication 3, caractérisé en ce que le mercapto-ester mixte comporte 1 reste de mercaptoacide pour 1 à 5 restes d'acide organique sans –SH, ou 1 reste de ce dernier pour 1 à 5 restes de mercapto-acide.

5. Procédé suivant une des revendications 1 à 4, caractérisé en ce que le mercapto-ester mixte présente une masse moléculaire de 178 à 2000 et de préférence de 200 à 1000.

6. Procédé suivant une des revendications 1 à 5, caractérisé en ce que le mercapto-ester est incorporé à la résine conjointement avec des composés métalliques stabilisants, connus en soi, notamment un ou plusieurs composés de métaux des groupes IIB, IIIA, IVA et VA de la Classification Périodique des Eléments, et au moins un composé organique de métal alcalino-terreux.

7. Procédé suivant la revendication 6, appliqué à du chlorure de polyvinyle plastifié, renfermant une huile époxydée, caractérisé en ce que 0,1 à 3%, en poids de la résine, d'un mercapto-ester mixte y sont incorporés conjointement avec 0,05 à 1,5% d'un composé organique de Ca, Mg ou Ba et 0,05 à 1,5% d'un composé du Zn, avec un rapport préféré de 1 à 3 atomes de métal alcalino-terreux pour 1 atome de Zn.

## Patentansprüche

1. Verfahren zur Wärmestabilisierung eines Halogenvinylharzes durch Einarbeiten in das Harz von mindestens einem Polyol-Mercaptoester, wobei der Ester als Folge der Veresterung nur eines Teils der Hydroxylgruppen des Polyols mit einer Mercaptosäure, während alle oder ein Teil der anderen Hydroxylgruppen mit einer SH-freien Säure verestert sind, gemischt ist, dadurch gekennzeichnet, dass letztgenannte Säure eine Fettsäure mit $C_6$ bis $C_{18}$ ist.

2. Verfahren nach Anspruch 1, dadurch gekennzeichnet, dass die Mercaptosäure, deren Rest in dem gemischten Mercaptoester vorhanden ist, der Formel

$$(HS)_n\text{–}R\text{–}(COOH)_m$$

entspricht, worin n einen Wert von 1 bis 5 hat, m = 1 oder 2 und R eine aliphatische Kette mit $C_1$ bis $C_{35}$ oder ein Cyclus ist.

3. Verfahren nach Anspruch 1 oder 2, dadurch gekennzeichnet, dass das Polyol, von dem der gemischte Ester abgeleitet ist, aus einer Kette oder einem Cyclus mit $C_2$ bis $C_{30}$ mit 2 bis 6 Hydroxylgruppen gebildet ist.

4. Verfahren nach Anspruch 3, dadurch gekennzeichnet, dass der gemischte Mercaptoester 1 Mercaptosäurerest auf 1 bis 5 organische Säurereste ohne –SH oder 1 Rest von letztgenanntem auf 1 bis 5 Mercaptosäurereste aufweist.

5. Verfahren nach einem der Ansprüche 1 bis 4, dadurch gekennzeichnet, dass der gemischte Mercaptoester ein Molekulargewicht von 178 bis 2000 und vorzugsweise von 200 bis 1000 aufweist.

6. Verfahren nach einem der Ansprüche 1 bis 5, dadurch gekennzeichnet, dass der Mercaptoester in das Harz zusammen mit an sich bekannten stabilisierenden Metallverbindungen, insbesondere einer oder mehreren Verbindungen von Metallen der Gruppen IIB, IIIA, IVA und VA des Periodensystems der Elemente, und mindestens einer organischen Erdalkalimetallverbindung eingearbeitet wird.

7. Verfahren nach Anspruch 6, angewendet auf plastifiziertes Polyvinylchlorid, das ein epoxydiertes Öl enthält, dadurch gekennzeichnet, dass darin 0,1 bis 3%, bezogen auf das Gewicht des Harzes, eines gemischten Mercaptoesters zusammen mit 0,05 bis 1,5% einer organischen Verbindung von Ca, Mg oder Ba und 0,05 bis 1,5% einer Verbindung von Zn, bei einem bevorzugten Verhältnis von 1 bis 3 Erdalkalimetallatomen auf 1 Zn-Atom, eingearbeitet sind.

## Claims

1. Process for the thermal stabilisation of a halogeno-vinyl resin, which comprises incorporating into the resin at least one polyol mercapto-ester, the ester being mixed, resulting from the esterification of only a part of the hydroxyls of the polyol by a mercapto-acid, while all or part of the other hydroxyls are esterified by an acid free from –SH, characterised in that the latter acid is a $C_6$ to $C_{18}$ fatty acid.

2. Process according to claim 1, characterised in that the mercapto-acid, the residue of which is present in the mixed mercapto-ester, corresponds to the formula

$$(HS)_n\text{–}R\text{–}(COOH)_m$$

where n has a value from 1 to 5, m = 1 or 2 and R is a $C_1$ to $C_{35}$ aliphatic chain or a ring.

3. Process according to claim 1 or 2, characterised in that the polyol, from which the mixed mercapto-ester is derived, is formed from a $C_2$ to $C_{30}$ chain or ring carrying 2 to 6 hydroxyls.

4. Process according to claim 3, characterised in that the mixed mercapto-ester comprises one mercapto-acid residue for 1 to 5 residues of the organic acid without –SH, or 1 residue of the latter per 1 to 5 mercapto-acid residues.

5. Process according to any of claims 1 to 4, characterised in that the mixed mercapto-ester has a molecular weight of 178 to 2000 and preferably of 200 to 1000.

6. Process according to any of claims 1 to 5, characterised in that the mercapto-ester is incorporated into the resin in conjunction with known stabilising metal compounds, particularly one or more compounds of metals of the Groups IIb, IIIA, IVA and VA of the Periodic Classification of the Elements, and at least one organic alkaline-earth metal compound.

7. Process according to claim 6, applied to plasticised polyvinyl chloride containing an epoxided oil, characterised in that 0.1 to 3%, by weight of the resin, of a mixed mercapto-ester is incorporated into it in conjunction with 0.05 to 1.5% of an organic compound of Ca, Mg or Ba and 0.05 to 1.5% of a compound of Zn, with a preferred ratio of 1 to 3 alkaline-earth metal atoms per 1 atom of Zn.